(19) **Europäisches Patentamt / European Patent Office / Office européen des brevets**

(11) **EP 4 274 704 B1**

(12) **FASCICULE DE BREVET EUROPEEN**

(45) Date de publication et mention de la délivrance du brevet:
**05.03.2025 Bulletin 2025/10**

(21) Numéro de dépôt: **22702754.7**

(22) Date de dépôt: **10.01.2022**

(51) Classification Internationale des Brevets (IPC):
**B23K 1/00** *(2006.01)*     **B23K 1/19** *(2006.01)*
**B23K 1/20** *(2006.01)*     **B23K 103/14** *(2006.01)*
**B23K 103/16** *(2006.01)*   **B23K 103/18** *(2006.01)*
**B23K 103/00** *(2006.01)*

(52) Classification Coopérative des Brevets (CPC):
**B23K 1/19; B23K 1/0008; B23K 1/20; B23K 1/206;**
B23K 2103/14; B23K 2103/16; B23K 2103/18;
B23K 2103/26; B23K 2103/30

(86) Numéro de dépôt international:
**PCT/FR2022/050053**

(87) Numéro de publication internationale:
**WO 2022/148941 (14.07.2022 Gazette 2022/28)**

(54) **PROCEDE D'ASSEMBLAGE PAR BRASAGE DIRECT D'UNE PREMIÈRE PIÈCE ET D'UNE DEUXIÈME PIÈCE, INCLUANT DES ÉTAPES DE PRÉPARATION DE LA SURFACE D'AU MOINS UNE DES PIÈCES**

VERFAHREN ZUM VERBINDEN EINES ERSTEN TEILS UND EINES ZWEITEN TEILS DURCH DIREKTHARTLÖTEN, EINSCHLIESSLICH STUFEN ZUR VORBEREITUNG DER OBERFLÄCHE VON MINDESTENS EINEM DER TEILE

METHOD FOR JOINING, BY DIRECT BRAZING, A FIRST PART AND A SECOND PART, INCLUDING STEPS OF PREPARING THE SURFACE OF AT LEAST ONE OF THE PARTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.01.2021 FR 2100219**

(43) Date de publication de la demande:
**15.11.2023 Bulletin 2023/46**

(73) Titulaire: **Commissariat à l'Energie Atomique et aux Energies Alternatives**
**75015 Paris (FR)**

(72) Inventeurs:
- **LARGILLER, Grégory**
  **38054 GRENOBLE CEDEX 09 (FR)**
- **EMONOT, Philippe**
  **38054 GRENOBLE CEDEX 09 (FR)**
- **VOYTOVYCH, Rayisa**
  **38130 ECHIROLLES (FR)**

(74) Mandataire: **Brevalex**
**Tour Trinity**
**1 B Place de la Défense**
**92400 Courbevoie (FR)**

(56) Documents cités:
CN-A- 103 352 222     FR-A1- 3 095 151
GB-A- 2 137 131       US-A- 4 468 309

**Description**

La présente invention se rapporte au domaine général de brasage et plus particulièrement à un procédé de brasage direct d'une première pièce et d'une deuxième pièce, voir la revendication 1.

L'invention est particulièrement intéressante puisqu'elle permet l'assemblage direct par brasage tendre (typiquement pour des températures inférieures à 450°C) de deux pièces en utilisant des brasures non-actives.

L'invention trouve des applications, dans le domaine des implants, par exemple des prothèses.

## ÉTAT DE LA TECHNIQUE ANTÉRIEURE

Classiquement, le brasage d'une pièce en carbone avec une pièce métallique est réalisé à des températures relativement élevées (notamment à des températures supérieures à 800°C). A titre d'exemples, les procédés d'assemblages hétérogènes suivants sont connus :

- une pièce en diamant et une pièce en acier assemblées avec une brasure Cu-10Sn-15Ti à 925°C et à 1050 °C (Li et al. « Interfacial Segregation of Ti in the Brazing of Diamond Grits onto a Steel Substrate Using a Cu-Sn-Ti Brazing Alloy », Metallurgical and Materials Transactions A 33A (2002) 2163-2172) ;
- un composite C/C et une pièce en titane assemblés avec des brasures commercialisées sous les références Cu-ABA (92,8Cu-3Si-2Al-2,25Ti %), TiCuNi (70Ti-15Cu-15Ni) et TiCuSil (68,8Ag-26,7Cu-4,5Ti) à des températures de brasage comprises entre 920 et 1050°C sous vide (Singh et al., « Active metal brazing and characterization of brazed joints in titanium to carbon-carbon composites », Materials Science and Engineering A 412 (2005) 123-128) ;
- un composite C/C assemblé à une pièce métallique de Ti-6Al-4V avec une brasure AgCuTi à 880°C (Liu et al. « Brazing of CIC composite and Ti-6Al-4V with graphene strengthened AgCuTi filler: Effects of graphene on wettability; microstructure and mechanical properties », Chinese Journal of Acronautics, 31(7), (2018), 1602-1608);
- un composites C/C assemblé à une pièce métallique à base de titane (TA6V) (WO 2007/066051 A2) en utilisant des intercalaires en céramique (par exemple en tungstène ou en nitrure d'aluminium) pour diminuer les contraintes issues du différentiel de dilatation entre les pièces, et une brasure de type Ag-Mn (dont le point de fusion est supérieur à 961°C) ou de type AgCuTi (dont le liquidus est supérieur à 815°C) ; au vu des températures de fusion des brasures, les températures de brasage sont certainement supérieures à 800°C.

Cependant, pour éviter les fortes contraintes thermomécaniques qui apparaissent dans les pièces massives lors de l'assemblage d'une pièce en carbone et d'une pièce en métal et ne pas détériorer les matériaux à assembler il est parfois nécessaire de réaliser l'assemblage à plus basse température.

Par exemple, dans le document US 2016/0144460 A1, des alliages à base d'étain, comme Sn-Ag-Cu-Cr, Sn-Ag-Cu, ou Sn-Ag-Cu-Ni sont utilisés pour le brasage de nanotubes de carbone à un élément en cuivre. Pour ne pas endommager les nanotubes de carbone par l'alliage liquide, le procédé est réalisé à des températures inférieures à 700°C. Ce procédé est utilisé pour réaliser des dispositifs de faibles dimensions, ici des composants électriques. De tels dispositifs impliquent de faibles déformations et donc de faibles contraintes thermomécaniques. Le brasage est de plus facilité par l'utilisation du cuivre qui est très ductile. Comme l'alliage à base d'étain s'oxyde facilement sous air et que la présence d'oxyde conduit à un mauvais mouillage de l'alliage de brasage, le procédé doit être réalisé à l'aide d'un flux (d'acides, de solvants, etc) pour éliminer les oxydes sous air et/ou sous atmosphère protectrice avec une teneur en oxygène réduite (atmosphère inerte, atmosphère réductrice, vide). Cependant, de telles contraintes compliquent la mise en œuvre du procédé.

Dans l'article de Yu et al. (« Interface reaction in ultrasonic vibration-assisted brazing of aluminum to graphite using Sn-Ag-Ti solder foil », Journal of Materials Processing Technology 221 (2015) 285-290), des brasures de type SnAgTi sont utilisées pour braser de l'aluminium avec du graphite. Le brasage est réalisé à 500°C sous air, en appliquant des vibrations ultrasoniques pour détruire les films d'oxyde à la surface de la brasure et de l'aluminium et pour améliorer la mouillabilité. Le comportement mécanique de l'assemblage n'est pas étudié. Cependant, l'utilisation d'ultrasons complique la mise en œuvre du procédé.

Une autre voie possible pour braser les céramiques à basse température est de réaliser une métallisation des composants non-mouillable avec par un revêtement dont le procédé comprend un recuit à haute température.Cette approche est largement utilisée depuis plusieurs décennies pour braser l'alumine.

Par exemple, la technique de métallisation de l'alumine la plus répandue consiste à appliquer un mélange de poudres de Mo et Mn puis réaliser un traitement thermique à haute température (>1400°C) pour former une phase vitreuse. Ce revêtement est ensuite recouvert par une couche de Ni ou de Cu de 2 à 10 $\mu$m qui permet ensuite le brasage conventionnel par des brasures non-actives. Cette technique dite « moly-manganèse » n'est pas applicable pour les pièces carbonées.

Dans le document US 6528123 B1, les auteurs réalisent la métallisation d'une céramique (alumine ou SiC) en déposant une couche submicronique d'un l'élément actif (Ti, Zr, Cr, V etc.) par dépôt PVD puis en déposant une couche plus épaisse d'un l'élément non-actif (Au,Cu, Ni, Ag, Pd, In ou Mo). Les pièces ainsi métallisées sont ensuite recuites à haute température (>900°C) pour assurer une bonne accroche de ces couches à la pièce en céramique.

En ce qui concerne la métallisation de pièces carbonées, les connaissances actuelles sont très limitées. On peut néanmoins citer les travaux de Song et al. (« A novel metallization process for soldering graphite to copper at low temperature », Journal of Alloys and Compounds 696 (2007)1199-1204). Leur procédé consiste à appliquer une poudre de Sn0.3Ag0.7Cu-9%Cr d'environ 50 $\mu$m d'épaisseur sur des pièces en graphite puis de réaliser un traitement thermique à 950°C pendant 30 min pour créer une couche mouillable par les brasures non-actives. L'assemblage avec du cuivre a ensuite été réalisé à 250°C en utilisant la pâte de brasure Sn3Ag0,5Cu sous air sur des pièces de faibles dimensions (20 mm $\times$ 10 mm $\times$ 3 mm). L'inconvénient de cette méthode est que l'étape de dépôt est réalisée en deux étapes et qu'elle nécessiterait la reprise de la surface métallisée par polissage.

Le document FR 3 095 151 A1 (décrivant le préambule de la revendication 1) propose un procédé d'assemblage d'une première pièce en carbone et une deuxième pièce à base de titane ou d'un alliage CrCo, le procédé comprenant les étapes de (a) mise en contact d'un matériau d'apport avec la première pièce et la deuxième pièce, (b) chauffage de l'ensemble jusqu'à une température d'assemblage supérieure ou égale à 600°C et inférieure ou égale à 800°C et (c) refroidissement de l'ensemble de manière à former un joint de brasure entre les deux pièces et à les assembler.

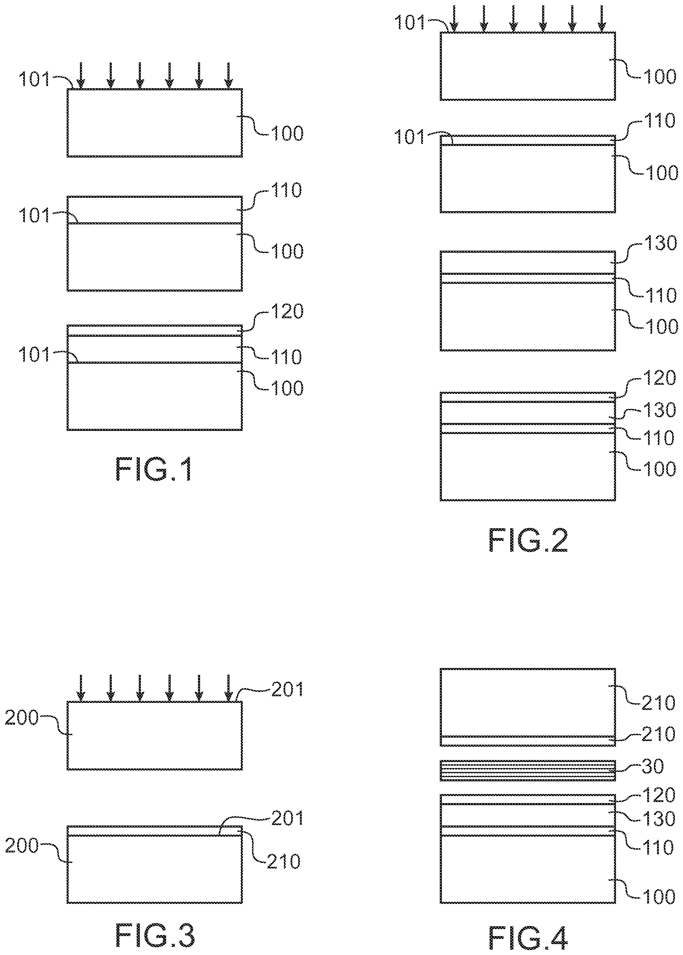

Le document US 4 468 309 A décrit un procédé de protection d'une pièce tubulaire contre les dommages par frottements. La pièce tubulaire qui peut être en un alliage à base de nickel est, selon le mode de réalisation de la figure 2, recouverte par une couche de chrome puis par une couche d'or.

Le document CN 103 352 222 A décrit un procédé de préparation d'un revêtement de tungstène sur une pièce en matériau carboné comprenant les étapes suivantes : (1) prétraiter la surface de la pièce ; (2) nettoyer au plasma la pièce et déposer une couche en un élément de transition comme, par exemple, du chrome par pulvérisation cathodique et (c) déposer en phase gazeuse un revêtement de tungstène.

## EXPOSÉ DE L'INVENTION

Un but de la présente invention est de proposer un procédé d'assemblage par brasage de deux pièces comprenant une étape de préparation de surface d'une pièce en carbone (en particulier, en carbone pyrolytique, en graphite ou composite C/C recouvert de carbone pyrolytique, ou en carbone vitreux) ou à base de titane, à base de nickel ou en CoCr simple et peu coûteux à mettre en œuvre, cette pièce étant destinée à être assemblée par brasage avec une autre pièce à des températures inférieures à 450°C, en utilisant des brasures non-actives, sans utiliser de matériau intercalaire, de flux ou de vibrations ultrasoniques, l'assemblage obtenu devant présenter une bonne tenue mécanique et une longue durée de vie.

Pour cela, la présente invention propose un procédé d'assemblage par brasage tel que défini dans la revendication 1 annexée, comprenant la préparation de la surface d'une pièce destinée à être assemblée avec une autre pièce par brasage comprenant les étapes suivantes :

    a) fournir une pièce destinée à être brasée, la pièce étant en carbone, de préférence, en carbone pyrolytique, en graphite ou composite C/C recouvert de carbone pyrolytique, ou en carbone vitreux, ou à base de titane, à base de nickel ou en CoCr,

    b) réaliser un traitement plasma d'un gaz neutre, sur la pièce moyennant quoi on nettoie la pièce et on forme sur la pièce une surface active,

    c) déposer une première couche d'un élément actif (dite couche d'accroche) sur la surface active de la pièce, l'élément actif étant un élément carburigène ; l'activation de surface réalisée à l'étape b) conduisant à une meilleure adhérence de la couche d'accroche métallique,

    d) déposer une deuxième couche en or sur la première couche, moyennant quoi on protège la première couche de l'oxydation.

L'invention se distingue fondamentalement de l'art antérieur par la mise en œuvre d'étapes particulières afin de préparer la surface de la pièce à assembler.

Il est ainsi possible d'assembler ensuite la pièce avec une autre pièce à une température d'assemblage inférieure à 350°C, et de préférence inférieure à 320°C.

La préparation de la surface de la pièce à assembler dans le procédé proposé permet d'obtenir un bon mouillage à de telles températures, et une meilleure réponse mécanique. La diminution de l'amplitude thermique réduit les contraintes thermomécaniques.

Le procédé de préparation mis en œuvre dans l'invention permet d'assembler durablement des pièces de différentes dimensions, et notamment des pièces massives résistantes aux efforts mécaniques. Les pièces ainsi assemblées présentent des interfaces fortes et une bonne tenue mécanique malgré la différence de comportement thermomécanique entre, par exemple une pièce en carbone et une pièce métallique à base de titane, à base de nickel ou en CoCr.

Des aspects particuliers de la présente invention sont définis dans les revendications dépendantes.

Avantageusement, l'élément actif est Ti, Cr ou Zr.

Avantageusement, la première couche a une épaisseur de 300 $\mu$m à 500 $\mu$m.

Selon une première variante de réalisation avantageuse, le procédé comporte une étape e), entre l'étape c) et l'étape d), au cours de laquelle on dépose une troisième couche d'un élément non-actif. On obtient ainsi un empilement de trois couches comprenant depuis la surface active de la pièce : la première couche, la troisième couche et la deuxième couche. La troisième couche joue le rôle de barrière de diffusion vis-à-vis de la première couche.

Avantageusement, l'élément non actif est W ou Nb.

Avantageusement, selon cette variante de réalisation, la première couche a une épaisseur de 30 à 50 nm et la troisième couche a une épaisseur de 100 à 500 nm.

Selon une deuxième variante de réalisation avantageuse, la première couche comprend, en plus de l'élément actif, un élément non-actif, de préférence W ou Nb, déposé simultanément à l'élément actif lors de l'étape c). Avantageusement, une telle couche comprend au moins 40% volumique, et de préférence au moins 60%, de l'élément actif afin de former une phase continue d'élément actif.

Avantageusement, selon cette variante de réalisation, la troisième couche a une épaisseur de 50 à 100 nm.

Pour ces deux variantes de réalisation avantageuse, l'élément non actif joue le rôle de barrière de diffusion et permet de protéger l'élément actif de la couche d'accroche vis-à-vis de la brasure. En effet, la dissolution de l'élément actif dans la brasure peut conduire à une perte d'adhérence.

La première pièce et la deuxième pièce peuvent être identiques ou différentes.

Selon un premier mode de réalisation particulier, la deuxième pièce fournie à l'étape ii) est, avantageusement, préparée selon le procédé de préparation tel que décrit précédemment. Autrement, dit la deuxième pièce est recouverte d'un empilement comprenant une première couche contenant un élément carburigène et une deuxième couche en or. L'empilement peut également comprendre une troisième couche contenant un élément non-actif, positionnée entre la première couche et la deuxième couche. Alternativement, la première couche peut comprendre l'élément non actif. Ce premier mode de réalisation particulier est particulièrement avantageux dans le cas d'une deuxième pièce en carbone.

Selon un deuxième mode de réalisation particulier, réalisé de préférence, dans le cas d'une deuxième pièce métallique à base de titane, à base de nickel ou en CoCr, la deuxième pièce peut être préparée selon les étapes suivantes :

a') réaliser un traitement plasma d'un gaz neutre, de préférence de l'argon, sur la deuxième pièce métallique moyennant quoi on nettoie la deuxième pièce métallique et on forme sur la deuxième pièce métallique une surface active,

b') recouvrir la surface active de la deuxième pièce métallique par une couche en or, ayant de préférence une épaisseur de 50 à 100 nm, moyennant quoi on protège la surface active de l'oxydation et on assure un bon mouillage.

Ce deuxième mode de réalisation particulier est particulièrement avantageux dans le cas d'une deuxième pièce métallique, par exemple en CoCr, à base de titane ou à base de nickel.

Avantageusement, le matériau d'apport est de l'étain ou un alliage à base d'étain. Il peut s'agir d'un alliage binaire à base d'étain tel que SnAg, SnCu ou SnIn. Il peut également s'agir d'un alliage ternaire à base d'étain.

De préférence, la température d'assemblage est inférieure à 350°C (par exemple comprise entre 250°C et 350°C), et encore plus préférentiellement inférieure à 320°C (par exemple comprise entre 250°C et 320°C). La température d'assemblage dépend de la brasure choisie.

Avantageusement, la première pièce est un substrat de graphite recouvert de carbone pyrolytique et la deuxième pièce est en alliage CoCr.

Le procédé présente de nombreux avantages :

- il ne nécessite pas d'étape de recuit thermique à haute température des couches déposées sur la pièce avant l'assemblage contrairement au procédé de préparation de pièces en céramique oxyde par métallisation PVD, pour lesquelles l'étape de recuit est nécessaire pour assurer une bonne adhérence,
- il permet l'assemblage des pièces carbonées avec une pièce en métal à basse température (<450°C) sans appliquer de vibrations ultrasoniques ou utiliser de flux lors de l'opération de brasage,
- les températures de brasage sont inférieures à 350°C, et de préférence inférieures à 320°C, ce qui permet d'assembler des pièces massives devant supporter des efforts mécaniques, malgré une différence de dilatation thermique des pièces à assembler; une telle différence conduit généralement à de fortes contraintes thermomécaniques lors de l'assemblage d'une pièce en carbone et d'une pièce en métal à température élevée (>800°C),
- l'assemblage de telles surfaces par brasage est direct et ne nécessite pas d'utiliser un matériau intercalaire, comme par exemple le cuivre ou le molybdène,

- il permet l'assemblage de deux pièces en carbone par brasage direct avec une brasure non-active,
- les joints formés et l'assemblage final présentent une bonne tenue mécanique.

D'autres caractéristiques et avantages de l'invention ressortiront du complément de description qui suit.

Il va de soi que ce complément de description n'est donné qu'à titre d'illustration de l'objet de l'invention et ne doit en aucun cas être interprété comme une limitation de cet objet.

## BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :

La figure 1 représente, de manière schématique, différentes étapes d'un procédé de préparation d'une pièce pour le brasage.

La figure 2 représente, de manière schématique, de manière schématique, différentes étapes d'un procédé de préparation d'une pièce pour le brasage, selon un autre mode de réalisation.

La figure 3 représente, de manière schématique, différentes étapes d'un procédé de préparation d'une pièce, de préférence métallique (par exemple à base de Ti, Ni ou CoCr) pour le brasage, selon un autre mode de réalisation:

La figure 4 représente, de manière schématique, en coupe, deux pièces à braser et un apport de brasure en configuration dite « sandwich » avant assemblage, selon un mode de réalisation particulier de l'invention.

La figure 5 est un cliché photographique de différentes pièces en graphite revêtues de PyC et métallisées, et positionnées dans un outillage de maintien, dans un four de brasage, selon un mode de réalisation particulier de l'invention.

La figure 6 est un cliché photographique de pièces graphite revêtues de PyC et métallisées par un bicouche TiAu formé par PVD, recouvertes par des feuilles de brasure, sur lesquelles on a positionné des tiges de TA6V métallisées par un tricouche TiWAu formé par PVD, les ensembles ainsi formés étant maintenus dans un outillage, dans un four de brasage, selon un autre mode de réalisation particulier de l'invention.

La figure 7 est un cliché photographique d'une éprouvette de torsion obtenue par assemblage par brasage d'une pièce en graphite revêtue de PyC et métallisée par un bicouche TiAu formé par PVD et d'une pièce en CoCr métallisée par une couche d'or obtenue par PVD, avec une brasure SnAg, selon un autre mode de réalisation particulier du procédé de l'invention.

La figure 8 est un cliché optique du joint de l'éprouvette de torsion obtenue par assemblage par brasage d'une pièce en graphite revêtue de PyC et métallisée PVD de TiAu et d'une pièce en CoCr métallisée par une couche d'or formée par PVD après un test mécanique de torsion, selon un autre mode de réalisation particulier du procédé de l'invention.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

En outre, dans la description ci-après, des termes qui dépendent de l'orientation, tels que « dessus », « dessous », etc. d'une structure s'appliquent en considérant que la structure est orientée de la façon illustrée sur les figures.

## EXPOSÉ DÉTAILLÉ DE MODES DE RÉALISATION PARTICULIERS

Nous allons maintenant décrire plus en détail le procédé d'assemblage d'une première pièce 100 avec une deuxième pièce 200 par brasage à des températures inférieures à 450°C, en utilisant des brasures non-actives, sans utiliser de matériau intercalaire, de flux ou de vibrations ultrasoniques.

La première pièce 100 et/ou la deuxième pièce 200 peuvent être des pièces métalliques, par exemple à base de titane, à base de nickel ou en CoCr ou des pièces en carbone.

La pièce en carbone (ou pièce carbonée) peut être choisie parmi les pièces en carbone pyrolytique, en graphite ou en un composite C/C recouvert de carbone pyrolytique, ou de carbone vitreux.

Par à base de titane, on entend que la pièce comprend plus de 50% massique de titane. Il peut s'agir de titane ou d'un alliage de titane. La pièce à base de titane peut être, par exemple, en Ti-6Al-4V (TA6V), Ti-6Al-7Nb, Ti-5Al-2.5Fe, Ti-13Nb-13Zr, Ti-12Mo-6Zr-2Fe, Ti35Nb-7Zr-5Ta, Ti-29Nb-13Ta-4.6Zr, Ti-35Nb-5Ta-7Zr-0.40, Ti-15Mo-5Zr-3Al, Ti-Mo ou T40.

Par à base de nickel, on entend que la pièce comprend plus de 50% massique de nickel. Il peut s'agir de nickel ou d'un alliage de nickel. La pièce à base de nickel peut être en un alliage Inconel®, Monel®, ou Hastelloy®.

La pièce en CoCr peut être en un alliage UNS R30008.

La ou les pièces à assembler peuvent avoir des dimensions de quelques mm² à quelques cm².

Le procédé d'assemblage de la première pièce 100 et de la deuxième pièce 200 comprend les étapes successives suivantes :

i) préparation de surface de la première pièce 100,
ii) préparation de surface de la deuxième pièce 200,
iii) mise en contact d'un matériau d'apport 300 avec la première pièce 100 et avec la deuxième pièce 200,
iv) chauffage de l'ensemble obtenu à l'étape iii) jusqu'à une température d'assemblage supérieure à la température de fusion du matériau d'apport 300, de manière à faire fondre le matériau d'apport 300, et maintien de la température d'assemblage pendant une durée de maintien, la température d'assemblage étant inférieure 450°C, et de préférence inférieure à 350°C, et encore plus préférentiellement inférieure à 320°C,
v) refroidissement de l'ensemble de manière à former un joint de brasure entre la première pièce 100 et la deuxième pièce 200, et à les assembler.

Le procédé de préparation de la première pièce 100 (étape i) comprend les étapes suivantes (figure 1) :

- fourniture de la première pièce 100 destinée à être brasée,
- éventuellement nettoyage chimique de la première pièce 100, par exemple dans un bac à ultrasons avec de l'acétone puis de l'éthanol, rinçage et séchage,
- réalisation d'un traitement de surface de la première pièce 100 par décapage ionique par bombardement d'ions de gaz neutre, de préférence un plasma d'argon, pour le cas échéant éliminer tout ce qui persiste après le nettoyage chimique et activer la surface 101 de la première pièce 100 pour une meilleure adhérence de la première couche sur la surface active 101,
- dépôt d'une première couche 110 (dite couche d'accroche) sur la surface active 101 de la première pièce 100, la première couche 110 comprenant un élément actif carburigène pour créer une bonne adhérence avec la surface active carbonée 101,
- dépôt d'une deuxième couche en or 120, ayant de préférence de 50 à 100 nm d'épaisseur pour protéger la première couche 110 de l'oxydation et assurer un bon mouillage lors de l'assemblage par brasage.

Par carburigène, on entend un élément qui forme des carbures. De tels éléments sont par exemple le zirconium, le molybdène, le chrome, le titane, le niobium et le tungstène. De préférence, la couche d'accroche est en Ti, Cr ou Zr. Il pourrait également s'agir d'un alliage de ces éléments tel que TiZr.

La couche d'accroche 110 a, de préférence, une épaisseur de 300 à 500 $\mu$m.

Selon une variante de réalisation représentée sur la figure 2, une troisième couche 130 peut être déposée entre la couche d'accroche 110 et la couche en or 120. Cette couche joue le rôle de barrière de diffusion.

La couche barrière 130 est en un élément non actif. Elle peut être par exemple en W ou Nb. Elle pourrait également être en nickel. Selon cette variante de réalisation, la couche d'accroche 110 a, avantageusement, une épaisseur de 30 à 50 nm d'épaisseur et la couche de barrière de diffusion 130 a, avantageusement, une épaisseur de 100 à 500 nm.

Selon une autre variante de réalisation, il est possible de déposer simultanément l'élément actif carburigène et l'élément non-actif. La première couche 110 ainsi obtenue a, avantageusement, une épaisseur de 100 à 500 nm. L'élément actif carburigène représente de préférence au moins 40% volumique de la première couche 100 afin de former une phase continue au sein de la première couche 110.

Les couches 110, 120 et/ou 130 peuvent être déposées par dépôt physique en phase vapeur (ou PVD pour « physical vapor deposition »), dépôt chimique en phase vapeur (ou CVD « chemical vapor deposition »), ou encore par projection plasma.

De préférence, on réalisera un dépôt par PVD.

De manière encore plus avantageuse, le traitement plasma peut être réalisé *in situ* dans la machine de dépôt.

Le gaz neutre peut être de l'argon ou de l'azote. De préférence, il s'agit d'argon.

Ce procédé de préparation de surface est particulièrement avantageux dans le cas d'une pièce en carbone.

Selon une première variante de réalisation, la deuxième pièce 200 est également préparée avec le procédé de préparation décrit précédemment. Par exemple, pour assembler deux pièces en carbone 100, 200, on pourra préparer la surface des deux pièces avec le procédé de préparation décrit précédemment.

Selon une autre variante de réalisation, le procédé de préparation de la surface de la deuxième pièce 200 peut comprendre les étapes suivantes : (Figure 3) :

- réalisation d'un traitement de surface de la deuxième pièce 200 par décapage ionique, de manière à former une surface active,
- dépôt d'une couche en or 210 ayant de préférence de 50 à 100 nm épaisseur, sur la surface active.

La couche en or 210 sera rapidement dissoute dans la brasure dès que cette dernière sera liquide.

Cette variante de réalisation est avantageuse dans le cas d'une deuxième pièce 200 métallique à base de titane, à base de nickel ou en CoCr.

La pièce métallique peut être recouverte par une fine couche native d'oxyde ne permettant pas un bon mouillage par la brasure à basse température (<450°C). Toutefois, la réactivité à l'interface est suffisamment bonne pour assurer une bonne adhérence de la brasure.

La première pièce 100 et la deuxième pièce 200 sont ensuite assemblées (figure 4).

La brasure 30 (aussi appelée matériau d'apport ou alliage de brasage) est avantageusement une brasure non active. De préférence la brasure est une brasure d'étain ou une brasure en un alliage d'étain. De préférence, l'alliage d'étain est choisi parmi SnIn, SnAg (96,5Sn-3,5Ag) et SnAgCu (96.5%Sn 3% Ag 0.5%Cu).

La brasure 30 est positionnée entre les deux pièces 100, 200 à assembler, et plus particulièrement entre les deux couches d'or 120, 210 (étape iii).

Après chauffage (étape iv), et refroidissement (étape v), on obtient un assemblage présentant de bonnes propriétés mécaniques. Les pièces 100, 200 sont assemblées par un joint de brasage dépourvu de fissures.

Bien que cela ne soit aucunement limitatif, l'invention trouve particulièrement des applications dans le domaine médical pour fabriquer des implants biocompatibles. Les implants peuvent, par exemple, être formés des deux pièces (ou parties) suivantes :

- une première pièce en carbone et notamment en graphite revêtu de PyC ou en composite C/C revêtu de PyC, et
- une deuxième pièce métallique, par exemple en titane, en TA6V ou CrCo.

Ces implants (prothèses) peuvent, par exemple, avoir des surfaces à braser de l'ordre de 20 cm$^2$.

Exemples illustratifs et non limitatifs d'un mode de réalisation :

Dans cet exemple, plusieurs éprouvettes de torsion ont été réalisées en assemblant une pièce en carbone et une pièce métallique au moyen d'une brasure basse température.

La pièce métallique a été usinée en forme d'une tige de 20 mm long et de 10 mm de diamètre. Elle est en alliage base Co (UNS R30008) dont la composition est donnée dans le tableau suivant :

| Elément | % massique |
|---------|------------|
| Co | 39,0 à 42,0 |
| Cr | 18,5 à 21,5 |
| Fe | base |
| Ni | 15,0 à 18,0 |
| Mo | 6,5 à 7,5 |
| Mn | 1,0 à 2,0 |

La pièce en carbone, notée G/PyC, est un disque de graphite POCO revêtue de carbone pyrolytique PyC (~200 μm) de 21 mm de diamètre et de 3 mm de hauteur.

La brasure (ou alliage de brasage) est un alliage à base d'étain SnAg. Sa composition est 96,5Sn-3,5Ag (en masse), son point de fusion est proche de celui de l'étain (232°C). Un tel alliage est, par exemple, commercialisé sous la forme d'un ruban de différentes épaisseurs par la société Indium Corporation sous le nom commercial Indalloy-121. Dans ces exemples, le ruban présente une épaisseur de 100 μm.

Métallisation des pièces en G/PyC et des pièces en CoCr :

Dans un premier temps, les pièces en carbone et les pièces métalliques sont nettoyées dans un bac à ultrasons avec de l'acétone puis de l'éthanol puis séchées à l'air comprimé.

Dans les exemples qui vont suivre, les pièces sont ensuite recouvertes par des masques en métal (de préférence en acier inoxydable) pour limiter la zone de métallisation à la surface d'assemblage.

Puis, les pièces recouvertes par les masques sont positionnées dans l'enceinte d'une machine PVD, puis le système est pompé jusqu'à $5 \times 10^{-7}$ mbar.

Les pièces sont ensuite traitées dans l'enceinte de la machine par plasma Ar afin de bien nettoyer leurs surfaces et former une surface active afin d'améliorer l'adhérence du dépôt métallique ultérieur (50W, 120 s). Puis les pièces sont métallisées.

Exemple 1 : Métallisation d'une pièce en G/PyC par Ti/Au (figure 1) :

Les pièces 100 sont en G/PyC.

Une couche d'accroche 110 en élément actif (Ti) de 500 nm est déposée sur la surface active 101 de la pièce 1000 à la vitesse de 0,3 nm/s dans l'enceinte PVD.

Puis, une couche de revêtement 120 en élément non-actif (Au) de 100 nm d'épaisseur est déposée pour protéger le film mince de Ti de l'oxydation et améliorer le mouillage.

Exemple 2 : Métallisation d'une pièce en G/PyC par Ti/W/Au (figure 2) :

Les pièces 100 sont en G/PyC.

Une couche d'accroche 110 en Ti de 30 nm est déposée sur la surface active 101 de la pièce 100 à la vitesse de 0,3 nm/s dans l'enceinte PVD.

Puis une couche barrière 130 en W de 100 nm d'épaisseur est déposée pour bloquer la diffusion et la dissolution de la couche d'accroche 110 dans la brasure. Cette couche barrière 130 évite la dissolution de la couche de l'élément actif.

Pour finir, une couche finale 120 en élément non-actif (Au) de 100 nm d'épaisseur est réalisé pour protéger le dépôt de l'oxydation et améliorer le mouillage.

Exemple 3 : Métallisation d'une pièce en CoCr par Au (figure 3) :

Les pièces 200 sont en CoCr.

Une couche 210 en un élément non-actif (Au) de 100 nm d'épaisseur est déposée pour améliorer le mouillage à basse température.

Assemblage (figure 4) :

Les pièces 100 en G/PyC métallisés et les pièces 200 en CoCr métallisées sont assemblées sans nettoyage supplémentaire.

Une brasure 30 sous forme de feuille ou de ruban est découpée par un emporte-pièce et nettoyée dans un bac à ultrasons avec de l'acétone puis de l'éthanol.

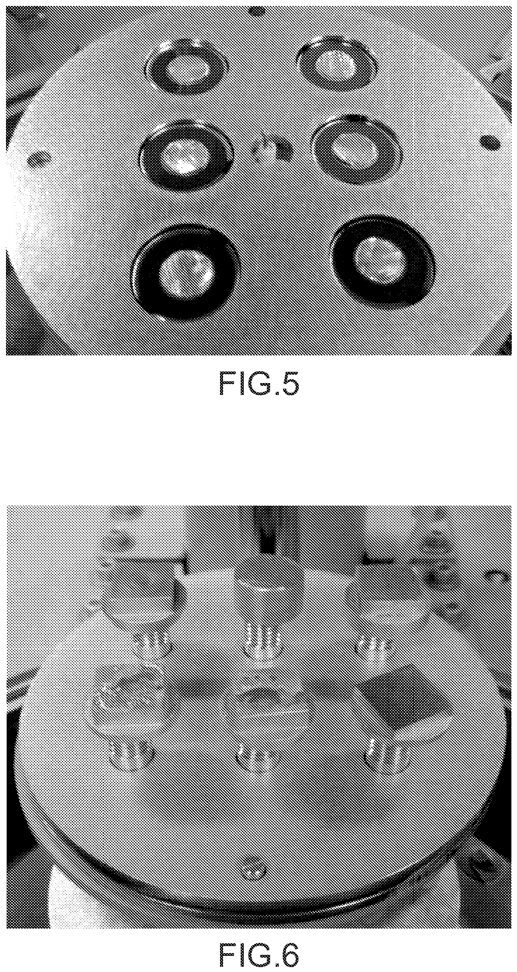

La brasure 30 est ensuite positionnée sur la pièce 100 en carbone (figure 5), puis la pièce métallique 200 est mise en contact avec la brasure 30. L'ensemble est maintenu dans un outillage (figure 6), puis placé dans un four sous vide secondaire. Une masse est ajoutée pour appliquer une pression (typiquement de 15 à 20 g/cm$^2$) sur la zone à braser.

L'ensemble est chauffé à une température de palier, supérieure au point de fusion de la brasure (350°C, en occurrence) pendant une durée de maintien de quelques dizaines de minutes (10 à 15 min).

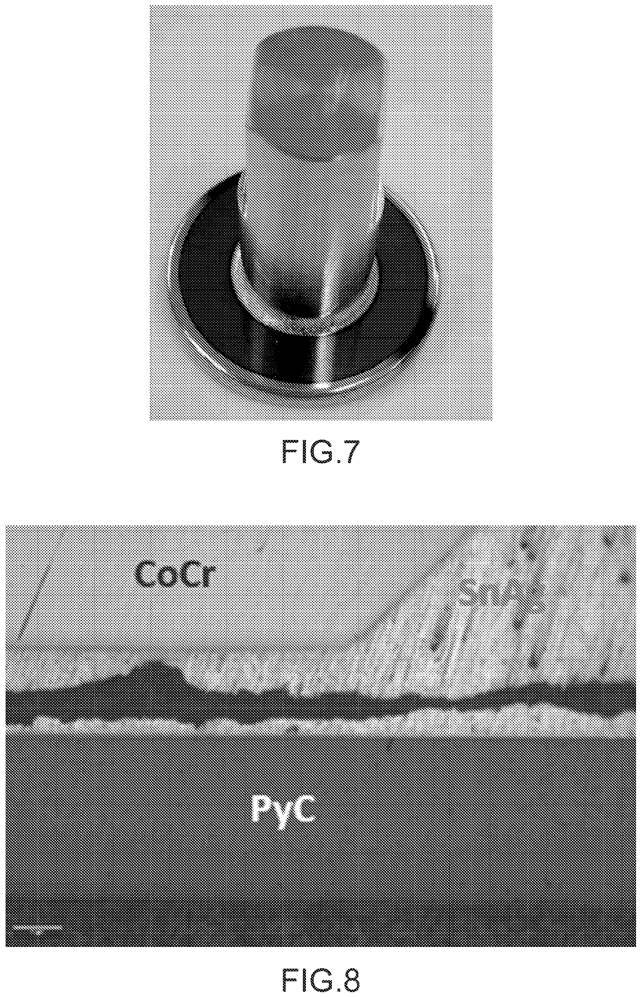

Après refroidissement, l'ensemble est sorti du four. Les pièces sont solidaires (figure 7).

Essais mécaniques de torsion :

Les assemblages ainsi obtenus par brasage sont soumis à différents essais mécaniques de torsion. Les essais ont été réalisés à la température ambiante (typiquement de 20 à 25°C) avec une machine de traction électromécanique commercialisée par MTS Systems Corporation. La rotation du mandrin est actionnée par le déplacement de la traverse (0,5 mm/min).

Les contraintes tangentielles maximales (à rupture) sont calculées par la formule suivante :

$$\tau_{max} = \frac{2}{\pi R^8} * F * C$$

avec F est la force maximale appliquée ; R est la rayon de l'axe de torsion et C le rayon du pion de torsion.

Le tableau suivant répertorie les résultats de la tenue mécanique en torsion pour les différents essais réalisés.

| Exemple | Substrat | Pièce métallique | Brasure | Contrainte (MPa) |
|---------|----------|------------------|---------|------------------|
| 1a | G/PyC (Ti, Au) | CoCr (Au) | Sn3,5Ag | 29,7 |
| 1b | G/PyC (Ti, Au) | CoCr (Au) | Sn3,5Ag | 34,6 |
| 1c | G/PyC (Ti, Au) | CoCr (Au) | Sn3,5Ag | 38,9 |
| 1d | G/PyC (Ti, Au) | CoCr (Au) | Sn3,5Ag | 41,8 |
| 1e | G/PyC (Ti, Au) | CoCr (Au) | Sn3,5Ag | 31,1 |
| 2a | G/PyC (Ti, W, Au) | CoCr (Au) | Sn3,5Ag | 25,3 |
| 2b | G/PyC (Ti, W, Au) | CoCr (Au) | Sn3,5Ag | 24,2 |
| 2c | G/PyC (Ti, W, Au) | CoCr (Au) | Sn3,5Ag | 22,8 |

Les contraintes tangentielles maximales (à rupture) obtenues pour les pièces en carbone avec le dépôt Ti/Au (1a à 1e) sont supérieures ou égale à 30 MPa et vont jusqu'à 41,8 MPa, confirmant la solidité du joint de brasage obtenu. La rupture est essentiellement cohésive et se produit dans la brasure (figure 8).

La métallisation de la pièce en carbone avec le dépôt Ti/Au assure une meilleure tenue mécanique en raison d'une excellente adhérence de la brasure à la couche de Ti. La rupture se produit dans la brasure avec des valeurs correspondant à la tenue de la brasure-même.

Quant aux pièces en carbone avec le dépôt Ti/W/Au (2a à 2c) les contraintes tangentielles maximale (à rupture) sont supérieures ou égale à 22,8 MPa. La rupture est essentiellement adhésive et se produit à l'interface brasure/couche de W.

## Revendications

1. Procédé d'assemblage d'une première pièce (100) et d'une deuxième pièce (200) par brasage comprenant les étapes suivantes :

    i) préparation d'une première pièce (100) en carbone, à base de titane, à base de nickel ou en alliage CoCr,
    ii) préparation d'une deuxième pièce (200) en carbone, à base de titane, à base de nickel ou en alliage CoCr,
    iii) mise en contact d'un matériau d'apport (300) avec la première pièce (100) et avec la deuxième pièce (200),
    iv) chauffage de l'ensemble obtenu à l'étape iii),
    v) refroidissement de l'ensemble de manière à former un joint de brasure entre la première pièce (100) et la deuxième pièce (200), moyennant quoi les pièces sont assemblées,
    **caractérisé en ce que** la préparation de la première pièce (100) lors de l'étape i) et éventuellement de la deuxième pièce (200) lors de l'étape ii) est réalisée selon les sous-étapes a) à d) suivantes :

    a) fournir la première pièce (100) en carbone, à base de titane, à base de nickel ou en alliage CoCr,
    b) réaliser un traitement plasma d'un gaz neutre, sur la première pièce (100) moyennant quoi on nettoie la pièce et on forme sur la pièce une surface active (101),
    c) déposer une première couche (110) comprenant un élément actif sur la surface active (101) de la première pièce (100), l'élément actif étant un élément carburigène, et
    d) déposer une deuxième couche (120) en or sur la première couche (110), moyennant quoi on protège la première couche (110) de l'oxydation et on assure un bon mouillage et

    **en ce que** le chauffage à l'étape iv) est réalisé jusqu'à une température d'assemblage supérieure à la température de fusion du matériau d'apport (300), de manière à faire fondre le matériau d'apport, et maintien de la température d'assemblage pendant une durée de maintien, la température d'assemblage étant inférieure à 450°C.

2. Procédé selon la revendication 1, **caractérisé en ce que** l'élément actif est Ti, Cr ou Zr.

3. Procédé selon l'une des revendications 1 et 2, **caractérisé en ce que** la première couche (110) a une épaisseur de

300 μm à 500 μm.

**4.** Procédé selon l'une des revendications 1 et 2, **caractérisé en ce que** le procédé comporte une étape e), entre l'étape c) et l'étape d), au cours de laquelle on dépose une troisième couche (130) d'un élément non-actif, de préférence W ou Nb.

**5.** Procédé selon la revendication précédente, **caractérisé en ce que** la première couche (110) a une épaisseur de 30 à 50 nm et **en ce que** la troisième couche (130) a une épaisseur de 100 à 500 nm.

**6.** Procédé selon l'une des revendications 1 et 2, **caractérisé en ce que** la première couche comprend également un élément non-actif, de préférence W ou Nb, déposé simultanément à l'élément actif lors de l'étape c).

**7.** Procédé selon la revendication 4, **caractérisé en ce que** la troisième couche (130) a une épaisseur de 50 à 100 nm.

**8.** Procédé selon l'une quelconque des revendications précédentes, **caractérisé en ce que** le matériau d'apport (300) est de l'étain ou un alliage à base d'étain tel que SnAg, SnCu ou SnIn.

**9.** Procédé selon la revendication 8, **caractérisé en ce que** la température d'assemblage est comprise entre 250°C et 320°C.

**10.** Procédé selon l'une quelconque des revendications précédentes, **caractérisé en ce que** la première pièce (100) est un substrat de graphite recouvert de carbone pyrolytique et **en ce que** la deuxième pièce (200) est en alliage CoCr.

## Patentansprüche

**1.** Verfahren zum Zusammenfügen eines ersten Bauteils (100) und eines zweiten Bauteils (200) durch Verlöten, umfassend die folgenden Schritte:

   i) Vorbereiten eines ersten Bauteils (100) aus Kohlenstoff, auf Titanbasis, auf Nickelbasis oder aus einer CoCr-Legierung,
   ii) Vorbereiten eines zweiten Bauteils (200) aus Kohlenstoff, auf Titanbasis, auf Nickelbasis oder aus einer CoCr-Legierung,
   iii) Inkontaktbringen eines Zusatzmaterials (300) mit dem ersten Bauteil (100) und mit dem zweiten Bauteil (200),
   iv) Erhitzen der in Schritt iii) erhaltenen Anordnung,
   v) Abkühlen der Anordnung, um eine Lötverbindung zwischen dem ersten Bauteil (100) und dem zweiten Bauteil (200) zu bilden, wodurch die Bauteile zusammengefügt werden,
   **dadurch gekennzeichnet, dass** das Vorbereiten des ersten Bauteils (100) während des Schritts i) und schließlich des zweiten Bauteils (200) während des Schritts ii) gemäß den folgenden Teilschritten a) bis d) durchgeführt wird:

   a) Bereitstellen des ersten Bauteils (100) aus Kohlenstoff, auf Titanbasis, auf Nickelbasis oder aus einer CoCr-Legierung,
   b) Durchführen einer Plasmabehandlung mit einem neutralen Gas am ersten Bauteil (100), wodurch das Bauteil gereinigt und eine Arbeitsoberfläche (101) auf dem Bauteil gebildet wird,
   c) Abscheiden einer ersten Schicht (110), die ein aktives Element umfasst, über der Arbeitsoberfläche (101) des ersten Bauteils (100), wobei das aktive Element ein karbidbildendes Element ist,
   d) Abscheiden einer zweiten Schicht (120) aus Gold über der ersten Schicht (110), wodurch die erste Schicht (110) vor Oxidation geschützt wird und eine gute Benetzung gewährleistet wird, und

   dass das Erhitzen in Schritt iv) bis zu einer Zusammenfügungstemperatur, die höher als die Schmelztemperatur des Zusatzmaterials (300) ist, durchgeführt wird, um das Zusatzmaterial zu schmelzen und die Zusammenfügungstemperatur für einen Haltezeitraum aufrechtzuerhalten, wobei die Zusammenfügungstemperatur weniger als 450°C beträgt.

**2.** Verfahren nach Anspruch 1, **dadurch gekennzeichnet, dass** das aktive Element Ti, Cr oder Zr ist.

**3.** Verfahren nach einem der Ansprüche 1 und 2, **dadurch gekennzeichnet, dass** die erste Schicht (110) eine Dicke von

300 μm bis 500 μm aufweist.

4. Verfahren nach einem der Ansprüche 1 und 2, **dadurch gekennzeichnet, dass** das Verfahren einen Schritt e) zwischen Schritt c) und Schritt d) enthält, während dem eine dritte Schicht (130) eines nicht aktiven Elements, vorzugsweise W oder Nb, abgeschieden wird.

5. Verfahren nach dem vorhergehenden Anspruch, **dadurch gekennzeichnet, dass** die erste Schicht (110) eine Dicke von 30 bis 50 nm aufweist und die dritte Schicht (130) eine Dicke von 100 bis 500 nm aufweist.

6. Verfahren nach einem der Ansprüche 1 und 2, **dadurch gekennzeichnet, dass** die erste Schicht auch ein nicht aktives Element, vorzugsweise W oder Nb, umfasst, das gleichzeitig mit dem aktiven Element während des Schritts c) abgeschieden wird.

7. Verfahren nach Anspruch 4, **dadurch gekennzeichnet, dass** die dritte Schicht (130) eine Dicke von 50 bis 100 nm aufweist.

8. Verfahren nach einem der vorhergehenden Ansprüche, **dadurch gekennzeichnet, dass** das Zusatzmaterial (300) Zinn oder eine Legierung auf Zinnbasis wie SnAg, SnCu oder SnIn ist.

9. Verfahren nach Anspruch 8, **dadurch gekennzeichnet, dass** die Zusammenfügungstemperatur zwischen 250°C und 320°C beträgt.

10. Verfahren nach einem der vorhergehenden Ansprüche, **dadurch gekennzeichnet, dass** das erste Bauteil (100) ein mit pyrolytischem Kohlenstoff bedecktes Graphitsubstrat ist und das zweite Bauteil (200) aus einer CoCr-Legierung besteht.

## Claims

1. A method for assembling a first part (100) and a second part (200) by brazing, comprising the following steps:

   i) preparing a first part (100) made of carbon, titanium-based, nickel-based or made of a CoCr alloy,
   ii) preparing a second part (200) made of carbon, titanium-based, nickel-based or made of a CoCr alloy,
   iii) bringing a filler material (300) into contact with the first part (100) and with the second part (200),
   iv) heating the assembly obtained at the step iii),
   v) cooling the assembly so as to form a solder joint between the part made of carbon (100) and the metal part (200), whereby the parts are assembled,
   **characterised in that** the preparation or the first part (100) during step i) and optionally the preparation or the second part (200) during step ii) is performed according to the following sub-steps a) to d) :

   a) providing the first part (100) made of carbon, titanium-based, nickel-based or made of a CoCr alloy,
   b) carrying out a plasma treatment with a neutral gas, on the first part (100) whereby the part is cleaned and an active surface (101) is formed on the part,
   c) depositing a first layer (110) comprising an active element over the active surface (101) of the first part (100), the active element being a carbide-forming element, and
   d) depositing a second layer (120) made of gold over the first layer (110), whereby the first layer (110) is protected from oxidation and good wetting is ensured and

   **in that** the heating at step iv) is performed up to an assembly temperature higher than the melting temperature of the filler material (300), so as to melt the filler material, and maintaining the assembly temperature for a hold time period, the assembly temperature being lower than 450°C.

2. The method according to claim 1, **characterised in that** the active element is Ti, Cr or Zr.

3. The method according to one of claims 1 and 2, **characterised in that** the first layer (110) has a thickness of 300 μm to 500 μm.

4. The method according to one of claims 1 and 2, **characterised in that** the method comprises a step e), between step c) and step d), during which a third layer (130) of a non-active element, preferably W or Nb, is deposited.

5. The method according to the preceding claim, **characterised in that** the first layer (110) has a thickness of 30 to 50 nm and **in that** the third layer (130) has a thickness of 100 to 500 nm.

6. The method according to one of claims 1 and 2, **characterised in that** the first layer also comprises a non-active element, preferably W or Nb, deposited simultaneously with the active element during step c).

7. The method according to claim 4, **characterised in that** the third layer (130) has a thickness of 50 to 100 nm.

8. The method according to any one of the preceding claims, **characterised in that** the filler material (300) is tin or a tin-based alloy such as SnAg, SnCu or SnIn.

9. The method according to claim 8, **characterised in that** the assembly temperature is comprised between 250°C and 320°C.

10. The method according to any one of the preceding claims, **characterised in that** the first part (100) is a graphite substrate covered with pyrolytic carbon and **in that** the second part (200) is made of a CoCr alloy.

FIG.1

FIG.2

FIG.3

FIG.4

FIG.5

FIG.6

FIG.7

FIG.8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- WO 2007066051 A2
- US 20160144460 A1
- US 6528123 B1
- FR 3095151 A1
- US 4468309 A
- CN 103352222 A

### Littérature non-brevet citée dans la description

- **LI et al.** Interfacial Segregation of Ti in the Brazing of Diamond Grits onto a Steel Substrate Using a Cu-Sn-Ti Brazing Alloy. *Metallurgical and Materials Transactions A*, 2002, vol. 33A, 2163-2172
- **SINGH et al.** Active metal brazing and characterization of brazed joints in titanium to carbon-carbon composites. *Materials Science and Engineering A*, 2005, vol. 412, 123-128
- **LIU et al.** Brazing of CIC composite and Ti-6Al-4V with graphene strengthened AgCuTi filler: Effects of graphene on wettability; microstructure and mechanical properties. *Chinese Journal of Acronautics*, 2018, vol. 31 (7), 1602-1608
- **YU et al.** Interface reaction in ultrasonic vibration-assisted brazing of aluminum to graphite using Sn-Ag-Ti solder foil. *Journal of Materials Processing Technology*, 2015, vol. 221, 285-290
- **SONG et al.** A novel metallization process for soldering graphite to copper at low temperature. *Journal of Alloys and Compounds*, 2007, vol. 696, 1199-1204